# EUROPÄISCHE PATENTSCHRIFT

(11) **EP 1 534 435 B1**
(45) Veröffentlichungstag und Bekanntmachung des Hinweises auf die Patenterteilung: **22.10.2008**
(21) Anmeldenummer: 03790611.2
(22) Anmeldetag: 19.08.2003
(51) Int. Cl.: B02C 17/16, B02C 17/18

(54) **RÜHRWERKSKUGELMÜHLE MIT RADIALRÜHRWERK**
BALL MILL PROVIDED WITH AN AGITATOR
MOULIN A BILLES A AGITATEUR

(30) Priorität: 28.08.2002 DE 10240231; 27.03.2003 DE 10313993
(43) Veröffentlichungstag der Anmeldung: 01.06.2005
(73) Patentinhaber: Bühler AG, 9240 Uzwil (CH)
(72) Erfinder: GEIGER, Armin, CH-9248 Bichwil (CH); EICHSTÄDT, Olaf, CH-8400 Winterthur (CH); MÜDESPACHER, Elias, CH-9242 Oberuzwil (CH)
(74) Vertreter: Frommhold, Joachim
(86) Internationale Anmeldenummer: PCT/CH2003/000560
(87) Internationale Veröffentlichungsnummer: WO 2004/020098

(56) Entgegenhaltungen:
- GB-A- 1 277 715
- US-A- 5 474 237
- US-A- 5 590 841
- US-A- 5 624 080
- PATENT ABSTRACTS OF JAPAN vol. 2003, no. 02, 5. Februar 2003 (2003-02-05) & JP 2002 316061 A (MITSUI MINING CO LTD), 29. Oktober 2002 (2002-10-29)

## Beschreibung

Die Erfindung bezieht sich auf eine Rührwerkskugelmühle gemäss dem Oberbegriff von Anspruch 1.

Derartige Rührwerkskugelmühlen haben einen Mahlkörper enthaltende Mahlkammer, einen Stator und einen Rotor, die in der Mahlkammer angeordnet sind, eine Mahlgut-Einlassöffnung und eine Mahlgut-Auslassöffnung zum Zuführen und Abführen von Mahlgut in die bzw. aus der Mahlkammer, sowie eine in der Mahlkammer stromauf von der Auslassöffnung angeordnete Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird.

Rührwerkskugelmühlen werden im Nahrungsmittelbereich und bei der Herstellung feiner Partikel bis hinab in den Nanobereich verwendet. Dabei werden in einer Flüssigkeit suspendierte Partikel oder Agglomerate in die Mahlkammer befördert und in der Mahlkammer mit Hilfe von Mahlhilfskörpern zerkleinert bzw. dispergiert, bevor sie aus der Mahlkammer heraus befördert werden. Damit die Mahlhilfskörper bei dieser Nassvermahlung nicht durch den flüssigen Mahlgutstrom aus der Rührwerkskugelmühle herausgeschleppt werden und somit der Rührwerkskugelmühle verloren gehen und das Mahlgut verunreinigen, werden die Mahlhilfskörper durch eine Trenneinrichtung in der Mahlkammer zurückgehalten. Als Trenneinrichtungen werden Trennspalte, Trennsiebe oder Zellenräder verwendet. Als Mahlhilfskörper kommen im wesentlichen kugelförmige Körper aus Stahl, Glas, Keramik oder Kunststoff in Frage.

Um die in das Mahlgut in der Mahlkammer eingetragene mechanische Mahlleistung zu steigern, sind bei bekannten Rührwerkskugelmühlen am Rotor und/oder am Stator Stifte vorgesehen, die in den Mahlraum ragen. Im Betrieb wird somit einerseits auf direktem Wege durch Stösse zwischen dem Mahlgut und den Stiften ein Beitrag zur Mahlleistung erbracht. Andererseits erfolgt ein weiterer Beitrag zur Mahlleistung auf indirektem Wege, durch Stösse zwischen den Stiften und den im Mahlgut mitgeführten Mahl-(hilfs)körpern und den dann wiederum erfolgenden Stössen zwischen dem Mahlgut und den Mahlkörpern. Schliesslich tragen auch noch auf das Mahlgut einwirkende Scherkräfte und Dehnkräfte zur Zerkleinerung der suspendierten Mahlgutpartikel bei.

Aus der US 5,590,841 ist eine Rührwerkskugelmühle gemäss dem Oberbegriff des Anspruchs 1 bekannt, bei der ein rotationssymmetrischer Rotor in einer komplementär zum Rotor ausgebildeten Mahlkammer angeordnet ist. An der Rotoroberfläche und auf der Mahlkammer-Innenfläche, d.h. der Statoroberfläche sind Stifte angeordnet, die von der jeweiligen Oberfläche in den Prozessraum ragen. Diese Mühle hat aber einen komplizierten Aufbau. Insbesondere bedarf es spezieller Mahlkörper-Antriebsmittel, um einerseits die Mahlkörper von der radial innen angeordneten Trennvorrichtung fernzuhalten und andererseits zu verhindern, dass der Mahlgutstrom über einen "Kurzschluss" vom Mahlgut-Einlass zum Mahlgut-Auslass gelangt. Ausserdem bedarf es spezieller Kanäle, um die Rückführung des von der Trennvorrichtung abgeschiedenen Grobgutes in den Mahlraum zu gewährleisten. Um zu verhindern, dass sich die axial angeordnete zylinderförmige Trennvorrichtung (Sieb oder Rohr mit Längsschlitzen) zusetzt und verstopft, ist diese über einen gesonderten Antrieb um ihre Zylinderachse drehbar.

Die US 5,624,080 beschreibt eine Rührwerkskugelmühle mit einem mehrere axial beabstandete Scheiben aufweisenden Rotor, der in einer zylinderförmigen Mahlkammer gelagert ist. Diese Mühle enthält aber keine Stifte an der Rotoroberfläche und an der Statoroberfläche, d.h. der Mahlkammer-Innenwand. Sie eignet sich daher nicht für das Eintragen mechanischer Zerkleinerungsenergie mit hoher Leistungsdichte. Zu dem durch die relativ geringe Leistungsdichte ohnehin schon relativ grossen Volumen dieser Mühle kommt noch hinzu, dass sie eine externe Trennvorrichtung in der Mahlgut-Auslassleistung besitzt, die ebenfalls gesondert angetrieben werden muss.

Der Erfindung liegt die Aufgabe zugrunde, bei einer vorgegebenen Rotor/Stator-Geometrie bzw. Mahlraum-Geometrie und bei vorgegebener Rotor-Drehzahl eine gegenüber bekannten Rührwerkskugelmühlen gesteigerte Mahlwirkung zu erzielen.

Diese Aufgabe wird durch die Rührwerkskugelmühle gemäss Anspruch 1 gelöst.

Dadurch, dass der Rotor erfindungsgemäss im wesentlichen die Form eines rotationssymmetrischen Körpers hat und der Stator durch eine im wesentlichen komplementäre Innenfläche der Mahlkammer gebildet ist, wird einerseits für den mechanischen Energieeintrag in das Mahlgut eine hohe Leistungsdichte sowie ein grösstmögliches Verhältnis zwischen Prozessraum-Oberfläche und Prozessraum-Volumen und somit eine optimale Kühlung des Mahlgutes während der Nassvermahlung bzw. Zerkleinerung ermöglicht.

Dadurch, dass der Rotor und der Stator erfindungsgemäss über ihre gesamte jeweilige Oberfläche verteilt angeordnete Stifte aufweisen, die sich von der jeweiligen Oberfläche erstrecken und in den Prozessraum ragen, werden über das gesamte Mahlraumvolumen verteilt die direkten und indirekten Einwirkungen der Stifte ermöglicht, d.h. die Stösse zwischen dem Mahlgut und den Stiften, die Stösse zwischen den Stiften und den im Mahlgut mitgeführten Mahlkörpern sowie die durch die Stifte in der Suspension aus Mahlgut und Mahlkörpern verursachten Scherkräfte und Dehnkräfte, die allesamt zur Zerkleinerung der suspendierten Mahlgutpartikel beitragen.

Insgesamt wird somit eine bessere Mahlleistung erzielt, gleichzeitig aber auch eine Vergleichmässigung der Mahlintensität erreicht und somit auch einer unnötigen Strapazierung des Mahlgutes, z.B. durch lokale Überhitzung, im gesamten Mahlraum entgegengewirkt.

Besonders vorteilhaft ist es, dass die Mahlgut-Einlassöffnung erfindungsgemäss in einem radial äusseren Bereich der Mahlkammer und die Mahlgut-Auslassöffnung in einem radial inneren Bereich der Mahlkammer angeordnet ist. Im Betrieb stellt sich dann an den Mahlhilfskörpern im wesentlichen ein Gleichgewicht ein zwischen einer radial nach aussen gerichteten Zentrifugalkraft-Komponente aufgrund der Drehung des Rotors um seine Drehachse und einer radial nach innen gerichteten Schleppkraft-Komponente aufgrund des radial von aussen nach innen strömenden Mahlgutes. Die Strömung des Mahlgutes wird z.B. durch eine gesonderte Pumpe aufrechterhalten. Durch diese Zentrifugalkraft-Wirkung erreicht man eine "dynamische" Entlastung der radial innen im Mahlgut-Auslassbereich angeordneten Trenneinrichtung, d.h. ein Grossteil der Mahlhilfskörper schwebt mehr oder weniger ortsfest in den radial aussen gelegenen Bereichen des Prozessraumes und bildet einen "Schwarm" aus Mahlhilfskörpern, durch den das Mahlgut hindurchgepumpt wird. Die wenigen dabei in den radial inneren Bereich des Prozessraumes gelangenden Mahlhilfskörper werden dann von der Trenneinrichtung abgefangen. Somit wird die Trenneinrichtung geschont und weniger stark abgenützt.

Der Rotor kann im wesentlichen die Form eines Kegelstumpfes haben, wobei die Mahlgut-Einlassöffnung im Bereich des breiten Kegelstumpfendes und die Mahlgut-Auslassöffnung im Bereich des schmalen Kegelstumpfendes der Mahlkammer angeordnet ist. Alternativ kann der Rotor auch im wesentlichen die Form eines Doppel-Kegelstumpfes haben. In beiden Fällen wird das Mahlgut vorzugsweise von radial aussen nach radial innen gepumpt.

Als weitere Alternative kann der Rotor im wesentlichen die Form eines Zylinders haben, wobei die Mahlgut-Einlassöffnung im Bereich des ersten Zylinderendes und die Mahlgut-Auslassöffnung im Bereich des zweiten Zylinderendes der Mahlkammer angeordnet ist und das Mahlgut im wesentlichen schraubenförmig entlang des Zylindermantels des Rotors durch den Prozessraum transportiert wird.

Bei einer weiteren vorteilhaften Ausgestaltung hat der Rotor im wesentlichen die Form einer Scheibe, wobei die Mahlgut-Einlassöffnung im radial aussen liegenden peripheren Bereich und die Mahlgut-Auslassöffnung im radial innen liegenden axialen Bereich der Mahlkammer angeordnet ist, so dass das Mahlgut wiederum von aussen nach innen durch den Prozessraum strömt. Auch hier stellt sich im Betrieb an den Mahlhilfskörpern das oben beschriebene Gleichgewicht einer Zentrifugalkraft-Komponente und einer Schleppkraft-Komponente ein. Das von aussen nach innen gepumpte Mahlgut bewirkt dann wieder die "dynamische" Entlastung der radial innen angeordneten Trenneinrichtung.

Besonders vorteilhaft ist es, wenn der scheibenförmige Rotor sowohl an seinen beiden ebenen Scheibenflächen als auch an seiner Umfangsfläche Stifte aufweist. Die radial am weitesten aussen liegenden Stifte haben im Betrieb die grösste Geschwindigkeit aller Stifte. Da ausserdem ein Grossteil der Mahlhilfskörper radial aussen schwebt, erfolgt ein wesentlicher Teil der Mahlwirkung schon allein in diesem peripheren Bereich des Prozessraumes, so dass gegenüber einer Rührwerkskugelmühle ohne Stifte am Scheibenrand eine deutliche Steigerung der Mahlleistung erzielt wird.

Vorzugsweise ist die Mahlkammer mit ihrem Stator und ihrem Rotor und mit der Trenneinrichtung derart in eine Verschwenkungsstellung verschwenkbar, dass die Trenneinrichtung an einen hochgelegen Ort gelangt, der vorzugsweise höher als ein Grossteil des gesamten Mahlkammer-Volumens ist. Dadurch wird eine Entnahme der Trenneinrichtung ohne Ablassen der Mahlhilfskörper oder des Produktes ermöglicht, da die Mahlhilfskörper-Schüttung in der Verschwenkungsstellung nicht bis an die Höhe der Trenneinrichtung reicht. Ausserdem ermöglicht dies in der Rührwerkskugelmühle die Verwendung einer rotierbaren Trenneinrichtung mit speichenartigen oder blattartigen Elementen, wie z.B. ein Speichenrad, Paddelrad oder Zellenrad, wobei die Trennwirkung der Trenneinrichtung erst zustande kommt, wenn sie zu rotieren beginnt. Aufgrund der erfindungsgemässen Verschwenkbarkeit der Verfahrenszone kann in diesem Fall die Trenneinrichtung in Betrieb genommen werden, solange die Verfahrenszone gekippt ist und sich die Trenneinrichtung an dem hochgelegen Ort befindet. Nach der Inbetriebnahme wird dann die Verfahrenszone in die Betriebsstellung gekippt, in der die Mahlhilfskörper an die nun trennend wirkende Trenneinrichtung gelangen.

Wenn in der Verschwenkungsstellung je nach Mahlkörpermenge in der Rührwerkskugelmühle zwischen 50% und 100% des gesamten Mahlkammer-Volumens unterhalb der Trenneinrichtung liegen, wird gewährleistet, dass aufgrund der Verwendung einer im Ruhezustand nicht wirksamen "rotierbaren" Trenneinrichtung oder aufgrund des Fehlens einer ausgebauten Trenneinrichtung keine Mahlhilfskörper aus der Mahlkammer herausfallen.

Zweckmässigerweise ist der verschwenkte, hochgelegene Ort der Trenneinrichtung der höchstmögliche durch Verschwenkung erreichbare Ort der Rührwerkskugelmühle. Dies erleichtert den Zugang zur Trenneinrichtung. Ausserdem können beim Ausbau der Trenneinrichtung Mahlhilfskörper, die sich in oder an der Trenneinrichtung befinden, über der Öffnung zur Mahlkammer problemlos in die Mahlkammer ausgeschüttet oder abgestreift werden.

Zweckmässigerweise ist die Verschwenkungsstellung eine Nicht-Betriebsstellung der Rührwerkskugelmühle. In der Betriebsstellung der Rührwerkskugelmühle ist die Drehachse des Rotors im wesentlichen horizontal angeordnet ist.

Vorzugsweise ist die Trenneinrichtung auswechselbar. Sie kann z.B. ein selbstreinigendes Trennsieb oder ein Paddelrad sein.

Bei einer weiteren vorteilhaften Ausführung ist der Rotor ein hohler Rotor mit am Rotor radial innen angeordneten Öffnungen und am Rotor radial aussen angeordneten Öffnungen. Dabei werden im Betrieb die Mahlhilfskörper mit einem Teil des Mahlgutstroms im Innern des Rotors durch die Schleuderwirkung des Rotors von einer radial innen angeordneten Öffnung zu einer der radial aussen angeordneten Öffnungen transportiert und ausserhalb des Rotors mit dem gesamten Mahlgutstrom durch die Pumpwirkung der Mahlgutzufuhr von der radial aussen angeordneten Öffnung zu der radial innen angeordneten Öffnung transportiert, so dass ein Mahlhilfskörper-Umlauf im Innern der Rührwerkskugelmühle erfolgt.

Vorzugsweise erstreckt sich die radial innen angeordnete Öffnung in Umfangsrichtung bei einem Innenradius Ri am Rotor und erstreckt sich die radial aussen angeordnete Öffnung in Umfangsrichtung bei einem Aussenradius Ra am Rotor. Dadurch wird der Eintritt der Mahlhilfskörper zusammen mit einem Teil des Mahlgutstroms in den Rotorhohlraum sowie der Austritt der Mahlhilfskörper zusammen mit diesem Teil des Mahlgutstroms aus dem Rotorhohlraum erleichtert.

Gemäss einer besonders bevorzugten Ausführung weist der hohle Rotor innere Kanäle auf, welche jeweils eine Fluidverbindung zwischen einer radial innen angeordneten Öffnung und einer radial aussen angeordneten Öffnung bilden. Diese im Innern des Rotors speichenartig angeordneten Kanäle üben eine starke Schleuderwirkung auf die Mahlhilfskörper aus, so dass diese effizient nach aussen zurücktransportiert werden.

Weitere Vorteile, Merkmale und Anwendungsmöglichkeiten der Erfindung ergeben sich aus der Beschreibung eines nicht einschränkend aufzufassenden Ausführungsbeispiels anhand der beigefügten Zeichnung, wobei:
- Fig. 1: eine Perspektivansicht einer erfindungsgemässen Rührwerkskugelmühle in ihrer Betriebsstellung ist;
- Fig. 2: eine Perspektivansicht der Rührwerkskugelmühle von Fig. 1 in einer gekippten Nicht-Betriebsstellung bzw. Wartungsstellung ist;
- Fig. 3: eine der Fig. 2 ähnliche und vergrösserte Perspektivansicht der erfindungsgemässen Rührwerkskugelmühle mit ausgebauter Trenneinrichtung ist;
- Fig. 4: eine der Fig. 1 ähnliche Perspektivansicht der erfindungsgemässen Rührwerkskugelmühle ist;
- Fig. 5: eine Perspektivansicht der Rührwerkskugelmühle von Fig. 4 mit geöffneter Verfahrenszone ist,
- Fig. 6: eine Schnittansicht einer Hälfte eines Rührwerks eines jeweiligen Ausführungsbeispiels der erfindungsgemässen Rührwerkskugelmühle zeigen, wobei die Schnittebene so gewählt ist, dass die Drehachse A-A des Rührwerks in ihr liegt;
- Fig. 7: eine Schnittansicht eines schematisch dargestellten Rührwerks zeigt, dessen Rotor innere Kanäle aufweist und einen Mahlkörper-Umlauf ermöglicht.

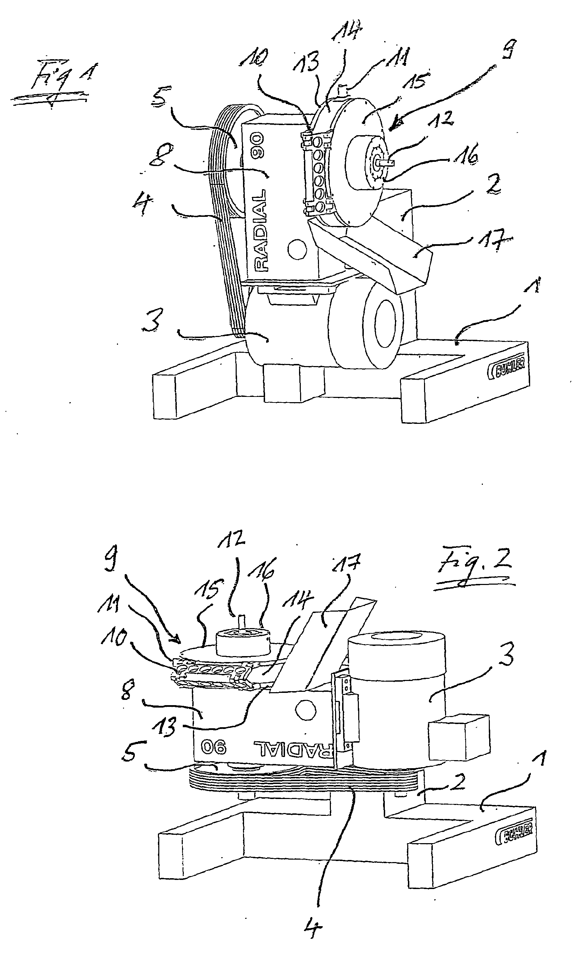

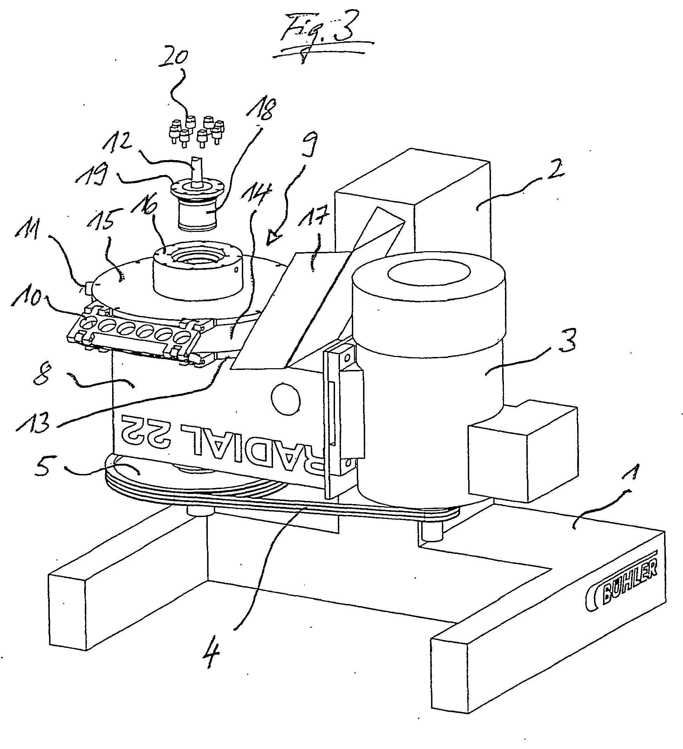

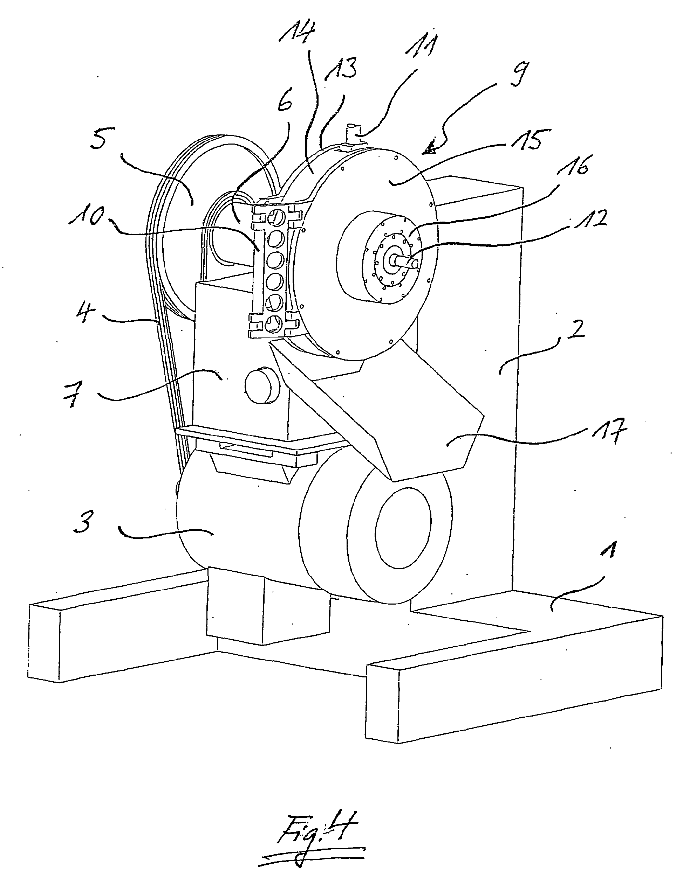

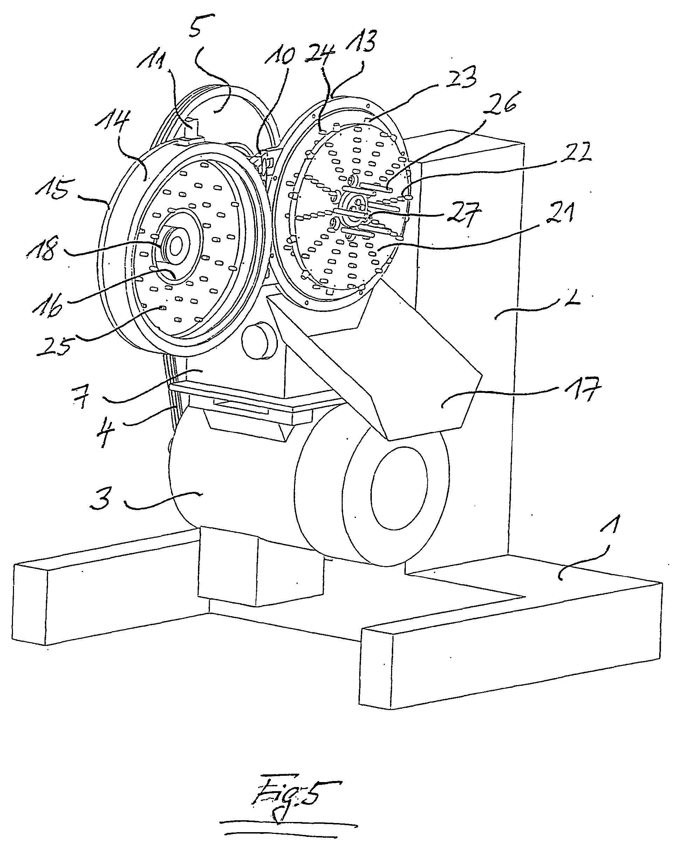

Fig. 1 zeigt eine erfindungsgemässe Rührwerkskugelmühle in ihrer Betriebsstellung mit horizontaler Rotordrehachse. Die Rührwerkskugelmühle ist an einem Vertikalelement 2 befestigt, das mit einem Maschinensockel 1 verbunden ist. Ein Motor 3 treibt über einen Riemenübertrieb 4 eine Riemenscheibe 5 an, die über eine Welle welche in einer unter einer Verkleidung 8 angeordneten Lagerung 6 (siehe Fig. 4) drehfest mit dem Rotor 21 (siehe Fig. 5) der Rührwerkskugelmühle verbunden ist. Der drehangetriebene Rotor 21 rotiert in der Mahlkammer 9. Das zu vermahlende Mahlgut gelangt über eine radial aussen an der Mahlkammer 9 radial angeordnete Mahlgut-Einlassöffnung 11 in die Mahlkammer 9 und verlässt die Mahlkammer 9 über eine radial innen an der Mahlkammer axial angeordnete Mahlgut-Auslassöffnung 12. Die Mahlkammer besteht im wesentlichen aus drei Teilen, und zwar einer ersten ebenen Mahlkammerwand 13, einer gekrümmten Mahlkammerwand 14 am Mahlkammerumfang und einer zweiten ebenen Mahlkammerwand 15. Die gekrümmte Mahlkammerwand 14 und die zweite ebene Mahlkammerwand 15 sind miteinander zu einer Einheit fest verbunden. Diese Einheit 14, 15 ist über ein Scharnier 10 an der ersten ebenen Mahlkammerwand 13 angelenkt. Ausserdem ist mit der zweiten ebenen Mahlkammerwand 15 ein zylindrischer Siebmantel 16 fest verbunden, der auf der Mahlkammerwand 15 mittig und axial nach aussen ragend angeordnet ist. Innerhalb dieses Siebmantels 16 befindet sich eine Trenneinrichtung 18 in Form eines zylindrischen Trennsiebes (siehe Fig. 3). Die Mahlgut-Auslassöffnung 12 wird durch ein axial verlaufendes Rohr gebildet, das ins Innere des zylindrischen Trennsiebes 18 mündet. Unterhalb der Auslassöffnung 12 ist eine schräg nach unten verlaufende Rinne 17 angeordnet, mit der Mahlgut und Mahlkörper aus der Verfahrenszone gezielt abgelassen werden können.

Fig. 2 zeigt die erfindungsgemässe Rührwerkskugelmühle der Fig. 1 mit im gekippten Zustand vertikaler Rotordrehachse. Die Bezugsziffern und die ihnen entsprechenden Elemente sind dieselben wie in Fig. 1. Wie man sieht, sind in Fig. 2 alle funktionellen Elemente 3 bis 17 der Rührwerkskugelmühle um 90° um eine horizontale Schwenkachse gekippt. Lediglich der Maschinensockel 1 und das Vertikalelement 2 sind in derselben Stellung wie in Fig. 1. In dieser gekippten Stellung ist der Siebmantel 16 leichter zugänglich, so dass im Rahmen einer Wartung das Trennsieb 18 (siehe Fig. 3) leichter aus- und eingebaut werden kann. Ausserdem können an dem Trennsieb haftende oder eingeklemmte Mahlhilfskörper (nicht gezeigt) leicht in die Mahlkammer 9 abgestreift oder abgeschüttelt werden.

Fig. 3 zeigt die gekippte erfindungsgemässe Rührwerkskugelmühle ähnlich wie in Fig. 2, aber etwas vergrössert. Die Bezugsziffern und die ihnen entsprechenden Elemente sind dieselben wie in Fig. 1 und in Fig. 2. Ausserdem ist das Trennsieb 18 im ausgebauten Zustand gezeigt. Wie man am besten in Fig. 3 erkennt, weist das zylinderförmige Trennsieb 18 an seinem oberen Zylinderrand einen Flansch 19 mit Löchern auf, über den das Trennsieb 18 beim Wiedereinbau mit Hilfe von Schrauben 20 am Siebmantel 16 befestigt wird. Der Aus- und Einbau des Trennsiebes 18 wäre in der Betriebsstellung mit horizontaler Rotordrehachse (siehe Fig. 1) nicht ohne Vorbereitung möglich. Der Mahlrauminhalt und insbesondere die Mahlkörper müssten zuvor abgelassen werden.

Ausserdem ermöglicht die erfindungsgemässe Rührwerkskugelmühle aufgrund ihrer Kippbarkeit anstelle des "passiven" Trennsiebes die Verwendung einer anderen Trenneinrichtung, wie z.B. eines Zellenrades oder eines Paddelrades, das nur im Betriebszustand, d.h. bei Rotation, Mahlhilfskörper abtrennen kann. Wenn die mit einer solchen "aktiven" Trenneinrichtung ausgestattete Rührwerkskugelmühle angehalten werden soll, kann sie zuvor in die vertikale Lage mit vertikaler Drehachse gekippt werden. Bei der erneuten Inbetriebnahme geht man umgekehrt vor. Zunächst werden der Rotor und die "aktive" Trenneinrichtung bei noch gekippter Rührwerkskugelmühle mit vertikaler Drehachse in Rotation versetzt, so dass die Trennwirkung der "aktiven" Trenneinrichtung wieder hergestellt wird, woraufhin die Rührwerkskugelmühle in die horizontale Betriebstellung mit horizontaler Drehachse zurückgekippt wird.

Fig. 4 zeigt die erfindungsgemässe Rührwerkskugelmühle etwas vergrössert als in Fig. 1. Die Bezugsziffern und die ihnen entsprechenden Elemente sind dieselben wie in Fig. 1, Fig. 2 und Fig. 3. Im Gegensatz zu Fig.1 wurde hier die Verkleidung 8 weggelassen, so dass man die Lagerung 6 der Antriebswelle und den Träger 7 des schwenkaren Maschinenteils erkennen kann.

Fig. 5 zeigt die Rührwerkskugelmühle der Fig. 4 mit geöffneter Verfahrenszone, d.h. in einem Zustand, bei dem die Mahlkammer 9 geöffnet ist. Die Mahlkammer 9 wurde geöffnet, indem die aus der zweiten ebenen Mahlkammerwand 15, der gekrümmten Mahlkammerwand 14 und dem Siebmantel 16 bestehende und über das Scharnier 10 an die erste ebene Mahlkammerwand 13 angelenkte Einheit 14, 15, 16 von der Mahlkammerwand 13 weggeschwenkt wurde. Man erkennt den mit der Antriebswelle drehfest verschraubten scheibenförmigen Rotor 21, der an seinen ebenen Oberflächenbereichen mit Stiften 22 und an seinem gekrümmten Randbereich entlang der Umgangsrichtung mit weiteren Stiften 23 ausgestattet ist. Entsprechende, gegenüber den Stiften 22 entgegengesetzt und zu ihnen radial versetzt angeordnete Stifte sind auch an den Statorflächen, d.h. auf der in den Prozessraum weisenden Seite der Mahlkammerwände 13 und 15 angeordnet. In der Mitte der weggeschwenkten Einheit 14, 15, 16 erkennt man das innerhalb des Siebmantels 16 konzentrisch angeordnete Trennsieb 18. Eine Besonderheit stellen die Stifte 26 dar, die ebenfalls an der Rotorscheibe 21, allerdings nur an ihrer zur Mahlkammerwand 15 weisenden Seite angeordnet sind und so um eine statische Trenneinrichtung eine abreinigende Turbulenz erzeugen. Diese Siebreinigungsstifte, deren Länge ungefähr der Zylinderlänge des Trennsiebs entspricht, sind in etwa konzentrisch um den Mittelpunkt der Rotorscheibe 21 angeordnet und erstrecken sich parallel zueinander und zur Rotordrehachse, so dass sie beim Schliessen der Mahlkammer, d.h. beim Zurückschwenken der Einheit 14, 15, 16, in den Zwischenraum zwischen dem Trennsieb 18 und dem Siebmantel 16 ragen. Sämtliche Elemente der Mahlkammerwand, d.h. die erste ebene Mahlkammerwand 13, die gekrümmte Mahlkammerwand 14 und die zweite ebene Mahlkammerwand 15 sowie der Siebmantel 16 weisen (nicht gezeigte) Kühlkanäle auf. In der Nähe der Verbindungsstellen zwischen den Siebreinigungsstiften 26 und der Rotorscheibe 21 befinden sich konzentrisch um den Mittelpunkt der Rotorscheibe 21 angeordnete Löcher 27 in der Rotorscheibe 21, über die die beiden Prozessraumhälften in Verbindung stehen.

Im Betrieb wird das zu vermahlende Produkt (z.B. Suspension mit zu zerkleinernden Partikeln) über die Einlassöffnung 11 in die Mahlkammer 9 gepumpt, in der die angetriebene Rotorscheibe 21 rotiert. Durch das Zusammenspiel der Mahlkörper (nicht gezeigt) und der Stifte 22, 23 an der Rotorscheibe 21 sowie der Stifte 24, 25 am Stator werden die im Produkt suspendierten Partikel zerkleinert. Das auf diese Weise bei seinem Durchtritt von aussen nach innen durch den Prozessraum zerkleinerte und dispergierte Produkt gelangt schliesslich in den Zwischenraum zwischen dem Trennsieb 18 und dem Siebmantel 16 und tritt durch das Trennsieb 18 zur Auslassöffnung 12 hindurch. Sollten trotzt des starken Zentrifugalfeldes in der Mahlkammer 9 und trotzt ihrer gegenüber dem Mahlgut höheren Dichte einige Mahlkörper durch "unglückliche" Stösse und/oder durch die Schleppwirkung des Mahlgutstromes bis an das Trennsieb gelangen, so werden sie spätestens dort zurückgehalten. Die gegenüber dem ruhenden Trennsieb 18 an dessen Oberfläche mit der Rotordrehzahl umlaufenden Siebreinigungsstifte 26 sorgen für eine starke Verwirbelung des Mahlgutes mit zur Oberfläche des Trennsiebes tangentialen Geschwindigkeitskomponenten. Dadurch wird das Trennsieb weitgehend von Ablagerungen und Verklebungen freigehalten. Ausserdem wird verhindert, dass sich Irrläufer unter den Mahlhilfskörpern am Trennsieb anlagern und zusammen mit dem Mahlgut das Trennsieb rasch verstopfen.

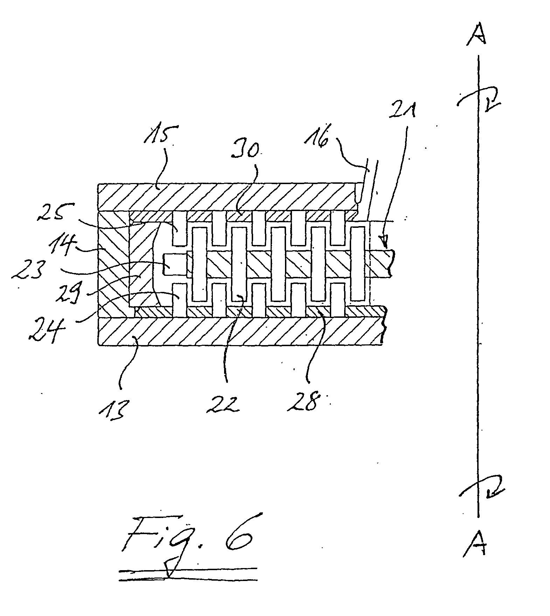

Fig. 6 zeigt eine Schnittansicht einer Hälfte eines Rührwerks eines jeweiligen Ausführungsbeispiels der erfindungsgemässen Rührwerkskugelmühle, wobei die Schnittebene so gewählt ist, dass die Drehachse A-A des Rührwerks in ihr liegt. Der radial innen liegende achsnahe Bereich des Rührwerks wurde weggeschnitten, da seine Auslegung für das in der Figur dargestellte Rührwerk weitgehend unabhängig ist.

Der insgesamt mit 21 bezeichnete scheibenförmige Rotor ist von achsparallelen Stiften 22 durchsetzt, die in achsparallelen Bohrungen der Rotorscheibe 21 eingepasst, eingeschraubt oder anderweitig befestigt sind und auf beiden Seiten der Rotorscheibe 21 aus dieser in den Mahlraum ragen. Ausserdem sind am äusseren Rand der Rotorscheibe 21 in Umfangsrichtung voneinander beabstandete radial nach aussen ragende Stifte 23 angebracht. Der Stator bzw. das Mahlraumgehäuse wird durch die erste ebene Mahlkammerwand 13, die gekrümmte Mahlkammerwand 14 sowie die zweite ebene Mahlkammerwand 15 gebildet (vgl. Fig. 5). Die beiden ebenen Mahlkammerwände 13 und 15 weisen in den Mahlraum ragende Stifte 24 bzw. 25 auf, die zu den Stiften 22 der Rotorscheibe 21 versetzt angeordnet sind. Die am Aussenrand der Rotorscheibe 21 angeordneten radialen Stifte 23 leisten einen wesentlichen Beitrag zur gesamten Mahlleistung, da in diesem radial äussersten Bereich sowohl diese Stifte 23 als auch das Mahlgut besonders hohe Geschwindigkeiten aufweisen, so dass dort eine besonders energiereiche Beanspruchung zwischen den Stiften 23 und dem Mahlgut bzw. den Mahlhilfskörpern erfolgt. Die genannten Mahlkammerwände 13, 14 und 15 weisen mahlraumseitige Auskleidungen 28, 29 bzw. 30 auf, die aus einem abriebfesten Material bestehen. Die ebenfalls starkem Verschleiss ausgesetzten Stifte 22, 23, 24 und 25 sind idealerweise austauschbar. Die ebene Mahlkammerwand 15 weist auf ihrer zur Drehachse A-A weisenden Seite den nur teilweise gezeigten Siebmantel 16 auf, der das Trennsieb 18 abdeckt (vgl. Fig. 5).

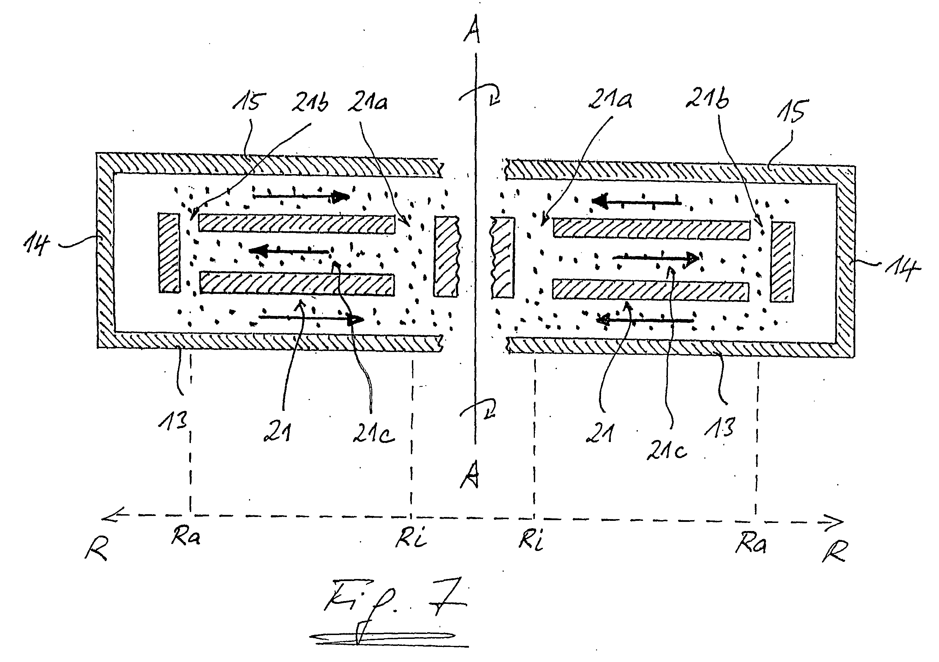

Fig. 7 zeigt eine Schnittansicht eines schematisch dargestellten Rührwerks, dessen Rotor innere Kanäle aufweist und einen Mahlkörper-Umlauf entlang der eingezeichneten Pfeile ermöglicht. Um die Übersichtlichkeit zu wahren, wurden die in Fig. 6 und Fig. 6 dargestellten erfindungsgemässen Stifte 22, 23, 24 und 25 in Fig. 7 weggelassen. Der insgesamt mit 21 bezeichnete Rotor besitzt in einer radialen Entfernung Ri von der Drehachse A-A mindestens eine radial innen liegende Öffnung 21a und in einer radialen Entfernung Ra von der Drehachse A-A mindestens eine radial aussen liegende Öffnung 21b. Zwischen diesen Öffnungen 21a und 21b besteht über Kanäle 21c im Innern des Rotors 21 ein Strömungskanal. Der Stator wir durch die Mahlkammerwände 13, 14 und 15 gebildet (vgl. Fig. 5). Im Betrieb wirken auf die (als schwarze Punkte dargestellten) in dem Mahlgut verteilten Mahlkörper sowohl Schleppkräfte als auch Trägheitskräfte. In dem Mahlraumbereich zwischen dem Rotor 21 und den den Stator bildenden Mahlkammerwänden 13 und 15 werden die Mahlkörper zusammen mit dem in den Mahlraum von radial aussen durch die Mahlgut-Einlassöffnung 11 (vgl. Fig. 1, Fig. 5) hereingepumpten Mahlgut durch die von 13 und 21 bzw. 13 und 15 gebildeten Kanäle radial nach innen geschleppt, da die radial nach innen gerichteten Schleppkräfte des Mahlgutstroms auf die Mahlkörper grösser sind als die radial nach aussen gerichteten Fliehkräfte der Mahlkörper auf ihren gekrümmten Bahnen. In den Kanälen ("Schleuderkanälen") 21c des Rotors 21 sind die Verhältnisse im Betrieb genau umgekehrt. Hier wirken durch das radial nach aussen geschleuderte Mahlgut nach aussen gerichtete Schleppkräfte zusammen mit den ebenfalls nach aussen gerichteten Fliehkräften auf die Mahlkörper ein, so dass diese radial nach aussen geschleppt werden. Somit werden stets in den radial innen liegenden Bereich des Mahlraums gelangende Mahlkörper wieder nach aussen befördert. Auf diese Weise wird verhindert, dass sich an der radial innen angeordneten Trenneinrichtung (nicht gezeigt) Mahlkörper, wodurch einer Verstopfung der Trenneinrichtung, einer übermässigen Abnutzung des Mahlraums und einer Überhitzung des Mahlguts im radial inneren Bereich des Mahlraums vorgebeugt wird.

### Bezugszeichenliste

- 1: Maschinensockel
- 2: Vertikalelement
- 3: Motor
- 4: Riemenübertrieb
- 5: Riemenscheibe
- 6: Lagerung der Antriebswelle
- 7: Träger des schwenkbaren Maschinenteils
- 8: Verkleidung
- 9: Mahlkammer
- 10: Scharnier
- 11: Mahlgut-Einlassöffnung
- 12: Mahlgut-Auslassöffnung
- 13: erste ebene Mahlkammerwand
- 14: gekrümmte Mahlkammerwand am Mahlkammerumfang
- 15: zweite ebene Mahlkammerwand
- 16: Siebmantel
- 17: Rinne
- 18: Trenneinrichtung, Trennsieb
- 19: Flansch
- 20: Schrauben
- 21: Rotor, Scheibe
- 21 a: radial innere Öffnung
- 21 b: radial äussere Öffnung
- 21 c: Kanäle
- 22: Stift an Scheibenebene
- 23: Stift am Scheibenrand
- 24: Stift am Stator
- 25: Stift am Stator
- 26: Siebreinigungsstift
- 27: Verbindungslöcher
- 28: Auskleidung
- 29: Auskleidung
- 30: Auskleidung

## Patentansprüche

1. Rührwerkskugelmühle mit einer Mahlkörper enthaltenden Mahlkammer, einem Stator und einem Rotor, die in der Mahlkammer angeordnet sind, einer Mahlgut-Einlassöffnung und einer Mahlgut-Auslassöffnung zum Zuführen und Abführen von Mahlgut in die bzw. aus der Mahlkammer, sowie einer in der Mahlkammer stromauf von der Auslassöffnung angeordneten Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird, wobei der Rotor (21) die Form eines rotationssymmetrischen Körpers hat und der Stator (13, 14, 15) durch eine im wesentlichen komplementär zur Rotoroberfläche geformte Innenfläche der Mahlkammer (9) gebildet ist, und wobei der Rotor (21) und der Stator (13, 14, 15) Stifte (22, 23, 24, 25) aufweisen, die sich von der jeweiligen Oberfläche erstrecken und in den Prozessraum ragen, **dadurch gekennzeichnet, dass** die Mahlgut-Einlassöffnung (11) in einem radial äusseren Bereich der Mahlkammer (9) und die Mahlgut-Auslassöffnung (12) in einem radial inneren Bereich der Mahlkammer (9) angeordnet ist, und dass die Stifte (22, 23, 24, 25) über die gesamte jeweilige Oberfläche des Rotors (21) und des Stators (13, 14, 15) verteilt angeordnet sind.

2. Rührwerkskugelmühle nach Anspruch 1, **dadurch gekennzeichnet, dass** der Rotor im wesentlichen die Form eines Kegelstumpfes hat, wobei die Mahlgut-Einlassöffnung im Bereich des breiten Kegelstumpfendes und die Mahlgut-Auslassöffnung im Bereich des schmalen Kegelstumpfendes der Mahlkammer angeordnet ist.

3. Rührwerkskugelmühle nach Anspruch 1, **dadurch gekennzeichnet, dass** der Rotor im wesentlichen die Form eines Doppel-Kegelstumpfes hat, wobei die Mahlgut-Einlassöffnung im Bereich des breiten Kegelstumpfendes und die Mahlgut-Auslassöffnung im Bereich des schmalen Kegelstumpfendes der Mahlkammer angeordnet ist.

4. Rührwerkskugelmühle nach Anspruch 1, **dadurch gekennzeichnet, dass** der Rotor im wesentlichen die Form einer Scheibe (21) hat, wobei die Mahlgut-Einlassöffnung (11) im radial aussen liegenden peripheren Bereich und die Mahlgut-Auslassöffnung (12) im radial innen liegenden axialen Bereich der Mahlkammer (9) angeordnet ist.

5. Rührwerkskugelmühle nach Anspruch 4, **dadurch gekennzeichnet, dass** die Scheibe (21) an ihren beiden ebenen Scheibenflächen und/oder an ihrer Umfangsfläche Stifte (22, 23) aufweist.

6. Rührwerkskugelmühle nach einem der vorhergehenden Ansprüche, **dadurch gekennzeichnet, dass** die Mahlkammer (9) mit ihrem Stator (13, 14, 15) und ihrem Rotor (21) und mit der Trenneinrichtung (18) derart in eine Verschwenkungsstellung verschwenkbar ist, dass die Trenneinrichtung (18) an einen hochgelegen Ort gelangt, der höher als ein Grossteil des Mahlkammer-Volumens ist.

7. Rührwerkskugelmühle nach Anspruch 6, **dadurch gekennzeichnet, dass** die Verschwenkungsstellung eine Nicht-Betriebsstellung der Rührwerkskugelmühle ist.

8. Rührwerkskugelmühle nach Anspruch 6 oder 7, **dadurch gekennzeichnet, dass** die Rotor-Drehachse in der Betriebsstellung der Rührwerkskugelmühle im wesentlichen horizontal angeordnet ist.

9. Rührwerkskugelmühle nach einem der Ansprüche 6 bis 7, **dadurch gekennzeichnet, dass** die Rotor-Drehachse in der Nicht-Betriebsstellung im wesentlichen vertikal angeordnet ist.

10. Rührwerkskugelmühle nach einem der Ansprüche 6 bis 9, **dadurch gekennzeichnet, dass** der Grossteil des Mahlkammer-Volumens zwischen 50% und 100% des gesamten Mahlkammer-Volumens einnimmt.

11. Rührwerkskugelmühle nach einem der Ansprüche 6 bis 10, **dadurch gekennzeichnet, dass** der hochgelegene Ort der Trenneinrichtung (18) der höchstmögliche durch Verschwenkung erreichbare Ort der Trenneinrichtung ist.

12. Rührwerkskugelmühle nach einem der vorhergehenden Ansprüche, **dadurch gekennzeichnet, dass** die Trenneinrichtung (18) auswechselbar ist.

13. Rührwerkskugelmühle nach einem der vorhergehenden Ansprüche, **dadurch gekennzeichnet, dass** die Trenneinrichtung (18) ein selbstreinigendes (26) Trennsieb ist.

14. Rührwerkskugelmühle nach einem der Ansprüche 1 bis 12, **dadurch gekennzeichnet, dass** die Trenneinrichtung ein Paddelrad ist.

15. Rührwerkskugelmühle nach einem der Ansprüche 1 bis 12, **dadurch gekennzeichnet, dass** die Trenneinrichtung ein Trennspalt ist.

16. Rührwerkskugelmühle nach einem der Ansprüche 1 bis 15, **dadurch gekennzeichnet, dass** der Rotor (21) ein hohler Rotor ist mit mindestens einer am Rotor (21) radial innen angeordneten Öffnung (21 a) und mindestens einer am Rotor (21) radial aussen angeordneten Öffnung (21 b), wobei im Betrieb die Mahlhilfskörper mit einem Teil des Mahlgutstroms im Innern des Rotors (21) durch die Schleuderwirkung des Rotors (21) von einer radial innen angeordneten Öffnung (21 a) zu einer radial aussen angeordneten Öffnung (21 b) transportiert werden und ausserhalb des Rotors (21) mit dem gesamten Mahlgutstrom durch die Pumpwirkung der Mahlgutzufuhr von der radial aussen angeordneten Öffnung (21b) zu der radial innen angeordneten Öffnung (21a) transportiert werden, so dass ein Mahlhilfskörper-Umlauf im Innern der Rührwerkskugelmühle erfolgt.

17. Rührwerkskugelmühle nach Anspruch 16, **dadurch gekennzeichnet, dass** die radial innen angeordneten Öffnungen (21 a) sich in Umfangsrichtung bei einem Innenradius Ri am Rotor (21) erstrecken und die radial aussen angeordneten Öffnungen (21 b) sich in Umfangsrichtung bei einem Aussenradius Ra am Rotor (21) erstreckten.

18. Rührwerkskugelmühle nach Anspruch 16 oder 17, **dadurch gekennzeichnet, dass** der hohle Rotor (21) innere Kanäle (21c) aufweist, welche jeweils einen Strömungskanal zwischen mindestens einer radial innen angeordneten Öffnungen (21 a) und mindestens einer der radial aussen angeordneten Öffnungen (21 b) bilden.

## Claims

1. An agitating ball mill comprising a grinding chamber containing grinding media, a stator and a rotor arranged in the grinding chamber, an input opening and an output opening for feeding and removing grinding material to or from the grinding chamber and a grinding medium separation device, arranged in the grinding chamber upstream from the output opening, used to separate grinding media entrained in the grinding material from the grinding material before the latter is removed from the grinding space through the output opening with the rotor (21) being shaped like a rotationally symmetrical element and the stator (13, 14, 15) being formed by an inner surface of the grinding chamber (9) whose shape essentially compliments the rotor surface and the rotor (21) and the stator (13, 14, 15) having pins (22, 23, 24, 25) extending from the respective surface and projecting into the processing space which is **characterised by** the fact that the input opening (11) for the grinding material is arranged in a radial outer area of the grinding chamber (9) and the output opening (12) for the grinding material in a radial inner area of the grinding chamber (9) and that the pins (22, 23, 24, 25) are distributed over the entire respective surface of the rotor (21) and the stator (13, 14, 15).

2. The agitating ball mill according to claim 1 **characterised by** the fact that the rotor is essentially shaped like a truncated cone with the grinding material input opening being arranged in the area of the wide truncated cone end and the grinding material output opening being arranged in the area of the narrow truncated cone end of the grinding chamber.

3. The agitating ball mill according to claim 1 **characterised by** the fact that the rotor is essentially shaped like a double truncated cone with the grinding material input opening being arranged in the area of the wide truncated cone end and the grinding material output opening being arranged in the area of the narrow truncated cone end of the grinding chamber.

4. The agitating ball mill according to claim 1 **characterised by** the fact that the rotor is essentially shaped like a disk (21) with the grinding material input opening (11) being arranged in the radial outer peripheral area and the grinding material output opening (12) in the radial inner axial area of the grinding chamber (9).

5. The agitating ball mill according to claim 4 **characterised by** the fact that the disk (21) features pins (22, 23) at its two flat disk surfaces and/or at its circumferential surface.

6. The agitating ball mill according to one of the previous claims **characterised by** the fact that grinding chamber (9) with its stator (13, 14, 15) and its rotor (21) and the separation device (18) can be pivoted into a swivelled position in such a way that the separation device (18) arrives at a high location which is higher than most of the grinding chamber volume.

7. The agitating ball mill according to claim 6 **characterised by** the fact that the swivelled position is a non-operating position of the agitating ball mill.

8. The agitating ball mill according to claims 6 or 7 **characterised by** the fact that the rotational axis of the rotor is essentially arranged horizontal in the operating position of the agitating ball mill.

9. The agitating ball mill according to one of the claims 6 to 7 **characterised by** the fact that the rotational axis of the rotor is essentially arranged vertical in the non-operating position.

10. The agitating ball mill according to one of the claims 6 to 9 **characterised by** the fact that most of the grinding chamber volume takes up between 50% and 100% of the entire grinding chamber volume.

11. The agitating ball mill according to one of the claims 6 to 10 **characterised by** the fact that the high location of the separation device (18) is the highest location of the separation device achievable via swivelling.

12. The agitating ball mill according to one of the previous claims **characterised by** the fact that the separation device (18) can be replaced.

13. The agitating ball mill according to one of the previous claims **characterised by** the fact that the separation device (18) is a self-cleaning (26) grading screen.

14. The agitating ball mill according to one of the claims 1 to 12 **characterised by** the fact that the separation device is a paddle wheel.

15. The agitating ball mill according to one of the claims 1 to 12 **characterised by** the fact that the separation device is a separating gap.

16. The agitating ball mill according to one of the claims 1 to 15 **characterised by** the fact that the rotor (21) is a hollow rotor with at least one hole (21 a) arranged at the radial inside of the rotor (21) and at least one hole (21 b) arranged at the radial outside of the rotor (21), with the auxiliary grinding media - during operation - being transported along with a portion of the grinding material flow inside the rotor (21) from a radially arranged inner hole (21 a) to a radially arranged outer hole (21 b) via the centrifugal action of the rotor (21), and being transported outside the rotor (21) with the entire grinding material flow from the radially arranged outer hole (21 b) to the radially arranged inner hole (21 a) via the pumping action of the grinding material input, so that the auxiliary grinding media circulate inside the agitating ball mill.

17. The agitating ball mill according to claim 16 **characterised by** the fact that the radially arranged inner holes (21 a) extend in the circumferential direction given an inner radius Ri at the rotor (21) and the radially arranged outer holes (21 b) extend in the circumferential direction given an outer radius Ra at the rotor (21).

18. The agitating ball mill according to claims 16 or 17 **characterised by** the fact that the hollow rotor (21) exhibits inner channels (21 c) which form one flow channel each between at least one of the radially arranged inner holes (21a) and at least one of the radially arranged outer holes (21 b).

## Revendications

1. Broyeur-agitateur à billes doté d'une chambre de broyage contenant des corps de broyage, un stator et un rotor qui sont disposés dans la chambre de broyage, une ouverture d'entrée de matière à moudre et une ouverture de sortie de matière moulue servant respectivement à l'amenée de la matière à moudre dans la chambre de broyage et à l'évacuation de la matière moulue de la chambre de broyage, ainsi qu'un dispositif de séparation des corps de broyage qui est disposé dans la chambre de broyage en amont de l'ouverture de sortie et qui sert à séparer les corps de broyage amenés avec la matière moulue avant l'élimination de cette dernière de la chambre de broyage via l'ouverture de sortie. Le rotor (21) présente la forme d'un corps à symétrie de révolution, et le stator (13, 14, 15) est formé par une surface intérieure de la chambre de broyage (9) qui est sensiblement complémentaire par rapport à la surface du rotor. Selon l'invention, le rotor (21) et le stator (13, 14, 15) présentent des broches (22, 23, 24, 25) qui s'étendent à partir de cette surface pour faire saillie dans la chambre de broyage. L'ouverture d'entrée de matière à moudre (11) est disposée dans une zone radialement extérieure de la chambre de broyage (9), l'ouverture de sortie de la matière moulue (12) est disposée dans une zone radialement intérieure de la chambre de broyage (9) et les broches (22, 23, 24, 25) sont réparties sur toute la surface respective du rotor (21) et du stator (13, 14, 15).

2. Broyeur-agitateur à billes selon la revendication 1, **caractérisé par le fait que** le rotor a sensiblement la forme d'un tronc de cône, l'ouverture d'entrée de la matière à moudre étant disposée dans la zone de l'extrémité large du tronc de cône et l'ouverture de sortie de la matière moulue étant disposée dans la zone de l'extrémité étroite du tronc de cône de la chambre à broyer.

3. Broyeur-agitateur à billes selon la revendication 1, **caractérisé par le fait que** le rotor a sensiblement la forme d'un tronc de cône double, l'ouverture d'entrée de la matière à moudre étant disposée dans la zone de l'extrémité large du tronc de cône et l'ouverture de sortie de la matière moulue étant disposée dans la zone de l'extrémité étroite du tronc de cône de la chambre à broyer.

4. Broyeur-agitateur à billes selon la revendication 1, **caractérisé par le fait que** le rotor a sensiblement la forme d'un disque (21), l'ouverture d'entrée de matière à moudre (11) étant disposée dans la zone radialement extérieure périphérique de la chambre de broyage (9), l'ouverture de sortie de la matière moulue (12) étant disposée dans la zone axialement intérieure de la chambre de broyage (9).

5. Broyeur-agitateur à billes selon la revendication 4 **caractérisé par le fait que** les deux surfaces planes du disque et /ou la surface circonférentielle du disque (21) sont munies de broches (22, 23).

6. Broyeur-agitateur à billes selon l'une des revendications susmentionnées **caractérisé par le fait que** la chambre de broyage (9) comportant le stator (13, 14, 15), le rotor (21) et le dispositif de séparation (18) peut être fait pivoter dans une position qui fait que le dispositif de séparation (18) atteint une position qui est plus élevée que la positon d'un plupart du volume de la chambre de broyage.

7. Broyeur-agitateur à billes selon la revendication 6 **caractérisé par le fait que** la position de pivotage est une position hors service du broyeur-agitateur à billes.

8. Broyeur-agitateur à billes selon la revendication 6 ou 7 **caractérisé par le fait que**, en position de service du broyeur-agitateur à billes, l'axe de rotation du rotor est sensiblement positionné horizontalement.

9. Broyeur-agitateur à billes selon l'une des revendications 6 à 7 **caractérisé par le fait que**, en positon hors service du broyeur-agitateur à billes, l'axe de rotation du rotor est sensiblement positionné verticalement.

10. Broyeur-agitateur à billes selon l'une des revendications 6 à 9 **caractérisé par le fait que** la plupart du volume de la chambre de broyage occupe entre 50% et 100% du volume de la chambre de broyage.

11. Broyeur-agitateur à billes selon l'une des revendications 6 à 10 **caractérisé par le fait que** la positon élevée du dispositif de séparation (18) est la position la plus élevée que le dispositif de séparation peut atteindre par le pivotement.

12. Broyeur-agitateur à billes selon l'une des revendications susmentionnées **caractérisé par le fait que** le dispositif de séparation (18) peut être échangé.

13. Broyeur-agitateur à billes selon l'une des revendications susmentionnées **caractérisé par le fait que** le dispositif de séparation (18) constitue un tamis de séparation (26) auto-nettoyant.

14. Broyeur-agitateur à billes selon l'une des revendications 1 à 12 **caractérisé par le fait que** le dispositif de séparation est une roue à aube.

15. Broyeur-agitateur à billes selon l'une des revendications 1 à 12 **caractérisé par le fait que** le dispositif de séparation est une fente de séparation.

16. Broyeur-agitateur à billes selon l'une des revendications 1 à 12 **caractérisé par le fait que** le rotor (21) est un rotor creux avec au moins une ouverture (21a) positionnée radialement à l'intérieur du rotor et au moins une ouverture (21b) positionnée radialement à l'extérieur du rotor. Pendant le fonctionnement, les corps auxiliaires de broyage sont transportés avec une partie du flux de la matière à mouler de l'ouverture (21a) positionnée radialement à l'intérieur à l'ouverture (21b) positionnée radialement à l'extérieur suite à l'effet centrifuge du rotor (21) et, suite à l'effet de pompage de du dispositif d'amenée de la matière à mouler, les corps auxiliaires de broyage sont transportés avec le flux de la matière à mouler de l'ouverture (21b) positionnée radialement à l'extérieur à l'ouverture (21a) positionnée radialement à l'intérieur de sorte qu'il y a une circulation des corps auxiliaires de broyage à l'intérieur du broyeur-agitateur à billes.

17. Broyeur-agitateur à billes selon la revendication 16 **caractérisé par le fait que**, dans le sens circonférentiel, les ouvertures (21a) positionnées radialement à l'intérieur se trouvent à un rayon intérieur Ri sur le rotor (21) et que les ouvertures (21b) positionnées radialement à l'extérieur se trouvent à un rayon extérieur Ra sur le rotor (21).

18. Broyeur-agitateur à billes selon la revendication 16 ou 17 **caractérisé par le fait que** le rotor creux (21) est muni de rainures intérieures (21c) formant chacune un canal d'écoulement entre au moins une ouverture positionnée radialement à l'intérieur (21a) et au moins une ouverture positionnée radialement à l'extérieur (21b).
